# EUROPÄISCHE PATENTSCHRIFT

(11) **EP 0 832 937 B1**
(45) Veröffentlichungstag und Bekanntmachung des Hinweises auf die Patenterteilung: **06.12.2000**
(21) Anmeldenummer: 97116474.4
(22) Anmeldetag: 22.09.1997
(51) Int. Cl.: C09B 5/62, C09D 11/00, D21H 21/28

(54) **Wasserlösliche Perylen-Farbstoffe, ihre Herstellung und Verwendung**
Water-soluble perylene dyes, their preparation and use
Colorants pérylènes solubles dans l'eau, leur préparation et leur utilisation

(30) Priorität: 30.09.1996 DE 19640182
(43) Veröffentlichungstag der Anmeldung: 01.04.1998
(73) Patentinhaber: Clariant GmbH, 65929 Frankfurt am Main (DE)
(72) Erfinder: Bauer, Wolfgang, Dr., 63477 Maintal (DE); Baumgart, Dieter, Dr., 63329 Egelsbach (DE); Schnaitmann, Dieter, Dr., 65817 Eppstein (DE); Kreutzer, Klaus-Peter, 61130 Nidderau (DE); Zöller, Walter, 63911 Klingenberg (DE)

(56) Entgegenhaltungen:
- DE-B- 1 103 286
- US-A- 2 914 531

## Beschreibung

Gegenstand der vorliegenden Erfindung sind wasserlösliche Perylen-Farbstoffe, Verfahren zu ihrer Herstellung, ihre Verwendung zum Färben und Bedrucken von natürlichen und synthetischen Fasermaterialien, sowie Aufzeichnungsflüssigkeiten, insbesondere für das Tintenstrahl- oder Ink-Jet-Verfahren und Flüssigeinstellungen für die Papiermassefärbung, welche die erfindungsgemäßen Farbstoffe enthalten.

Beim Tintenstrahl- oder Ink-Jet-Verfahren handelt es sich um ein berührungsloses Druckverfahren, bei dem Tröpfchen der Aufzeichnungsflüssigkeit aus einer oder mehreren Düsen auf das Zu bedruckende Substrat gelenkt werden. Um Drucke hoher Schärfe und guter Auflösung zu erhalten, müssen die Aufzeichnungsflüssigkeiten bzw. die darin enthaltenen Farbstoffe hohen Anforderungen genügen, insbesondere im Hinblick auf Reinheit, Partikelfreiheit, Löslichkeit, Lagerstabilität, Viskosität, Oberflächenspannung sowie Leitfähigkeit. Insbesondere werden sehr hohe Anforderungen an die Farbstärke, Brillanz und Echtheitseigenschaften wie beispielsweise Lichtechtheit, Wasserechtheit und Reibechtheit gestellt. Eine hohe Lichtechtheit ist insbesondere von großer Bedeutung für Ink-Jet-Anwendungen in Außenbereichen und bei der Herstellung von Ink-Jet-Drucken mit photographischer Qualität.
Das Tintenstrahl- oder Ink-Jet-Verfahren und die an die Farbstoffe bzw. Aufzeichnungsflüssigkeiten gestellten Anforderungen sind z. B. beschrieben in: Kirk-Othmer, Encyclopedia of Chemical Technology, 3rd Edition, Vol. 20 (1982), 153-156; Ullmann's Encyclodedia of Industrial Chemistry, 5th Edition, Vol A 13 (1989), 588-594; R. W. Kenyon, in P. Gregory, Chemistry and Technology of Printing and Imaging Systems, Blackie & Professional, London, 1996.

Die Entwicklung von wasserlöslichen Magenta-Farbstoffen, welche die gewünschte Kombination von hoher Brillanz und Farbstärke, hoher Lichtechtheit und guter Wasserechtheit aufweisen, hat sich bisher als sehr schwierig erwiesen ( s. beispielsweise P. Gregory, High - Technology Applications of Organic Colorants, Plenum Press, New York (1991), S. 197-201).

Es besteht somit ein Bedarf an wasserlöslichen Farbstoffen, welche den bereits bekannten Magenta-Farbstoffen insbesondere in der Lichtechtheit überlegen sind und gleichzeitig die weiteren für den Ink-Jet-Bereich geforderten Eigenschaften aufweisen.

Wasserlösliche chlorhaltige Perylen-Farbstoffe, welche als Küpen- oder Reaktiv-Farbstoffe zum Färben oder Bedrucken von Baumwollfasern eingesetzt werden können, sind bereits bekannt und beispielsweise beschrieben in CH 432 693, US 2 914 531 und DE-C 1 103 286.
Die in den genannten Patentdokumenten genannten, chlorhaltigen Perylen-Farbstoffe weisen jedoch Nachteile bei der Herstellung von Aufzeichnungsflüssigkeiten für das Ink-Jet-Verfahren auf, insbesondere im Hinblick auf Wasserlöslichkeit, Lagerstabilität von Tinten und Aufzeichnungsflüssigkeiten und in der Brillanz der erhaltenen Drucke.

Überraschenderweise wurde jetzt gefunden, daß die gestellten Anforderungen von bestimmten wasserlöslichen, chlorfreien Perylen-Farbstoffen erfüllt werden.

Die vorliegende Erfindung betrifft somit wasserlösliche Perylen-Farbstoffe der allgemeinen Formel I 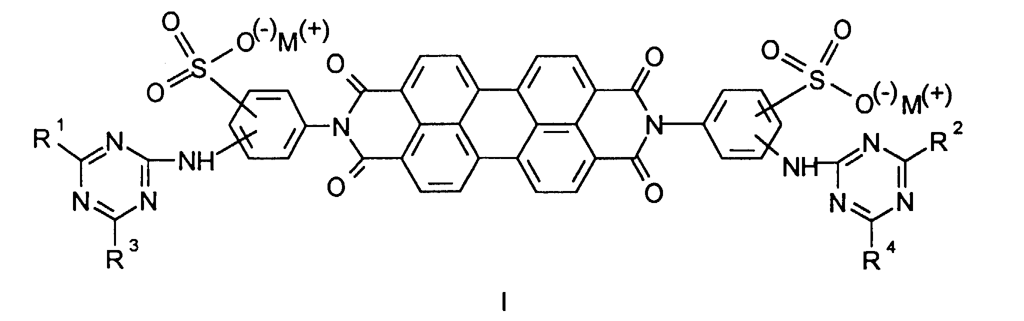 worin
- R¹ und R²: unabhängig voneinander für die Reste A-X-COOM oder A-X-SO₃M;
- R³ und R⁴: unabhängig voneinander für die Reste R¹ oder R² oder für OR⁵ oder NR⁶ R^{7;}
- A: für NR⁸ oder S;
- X: für einen geradkettigen oder verzweigten Alkylen-Rest, für einen geradkettigen oder verzweigten, durch Hydroxy, Carboxy oder Amino substituierten Alkylenrest, einen Arylenrest oder einen gegebenenfalls durch Hydroxy, Carboxy oder Sulfo substituierten Arylen-Rest;
- R⁵, R⁶ und R⁷: unabhängig voneinander für Wasserstoff, (C₁-C₄)-Alkyl oder für (C₁-C₄)-Alkyl, das durch einen oder mehrere Hydroxy- oder 2-Hydroxyethoxy-, (C₁-C₄)-Alkoxy- oder Amino-Gruppen substituiert ist;
- R⁸: Wasserstoff, Methyl, Ethyl und
- M: für ein einwertiges Kation oder ein Äquivalent eines mehrwertigen Kations
stehen.

X steht bevorzugt für einen geradkettigen oder verzweigten (C₁-C₆)-Alkylen-Rest, einen geradkettigen oder verzweigten, durch Hydroxy, Carboxy oder Amino substituierten (C₁-C₆)-Alkylenrest, einen Phenylenrest oder einen gegebenenfalls durch Hydroxy, Carboxy oder Sulfo substituierten Phenylenrest. Besonders bevorzugt steht X für einen (C₁-C₄)-Alkylen- oder Phenylenrest. X bedeutet beispielsweise Methylen, Ethylen, Ethan-1,1-diyl, Propan-1,1-diyl, 1,2-Propylen, 1,6-Hexylen, 2-Methylpropan-1,1-diyl, 3-Methylbutan-1,1-diyl 2-Methylbutan-1,1-diyl, 2-Hydroxyethan-1,1-diyl, Propansäure-3,3-diyl, Butansäure-4,4-diyl, 5-Aminopentan-1,1diyl, 3-Aminopropan-1,1-diyl oder 4-Aminobutan-1,1diyl. R⁵, R⁶ und R⁷ bedeuten beispielsweise Wasserstoff, Hydroxyethyl, 2-Hydroxypropyl, 3-Hydroxypropyl, Methoxyethyl, Ethoxyethyl, wobei Wasserstoff, Hydroxyethyl und Hydroxypropyl bevorzugt sind.
R⁸ bedeutet beispielsweise Wasserstoff, Methyl oder Ethyl, wobei Wasserstoff bevorzugt ist.
M steht bevorzugt für ein Lithium-, Natrium-, Kalium- oder Ammonium-lon der allgemeinen Formel II

R⁹R¹⁰R¹¹R¹²N^{⊕} (II)

in der R⁹, R¹⁰, R¹¹ und R¹² unabhängig voneinander Wasserstoff, unsubstituiertes (C₁-C₄)-Alkyl oder durch eine oder mehrere Hydroxy- oder 2-Hydroxyethoxy-Gruppen substituiertes (C₁-C₄)-Alkyl bedeuten. M steht darüberhinaus bevorzugt für eine Mischung der genannten Kationen.

In bevorzugten wasserlöslichen Perylen-Farbstoffen der allgemeinenFormel I stehen die Reste R¹, R², R³ und R⁴ unabhängig voneinander für A-X-COOM oder A-X-SO₃M, M, worin A, X und M die oben genannte Bedeutung besitzen. In besonders bevorzugten erfindungsgemäßen Farbstoffen der allgemeinen Formel I stehen die Reste R¹, R², R³ und R⁴ unabhängig voneinander für A-X-COOM, worin A und X die oben genannte Bedeutung haben.

Die erfindungsgemäßen Perylen-Farbstoffe der allgemeinen Formel I können beispielsweise dadurch hergestellt werden, daß man Perylen-Farbstoffe der allgemeinen Formel III 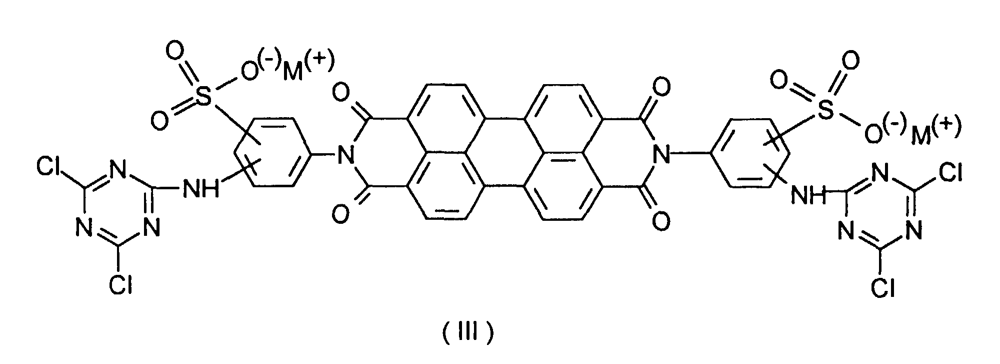 worin M die oben genannte Bedeutung besitzt, mit Verbindungen der allgemeinen Formeln IV, V, VI und/ oder VII 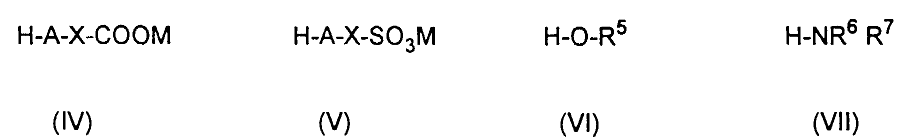 worin A, X, M, R⁵, R⁶ und R⁷ wie oben angegeben definiert sind, umsetzt.

Die Umsetzungen werden normalerweise im wäßrigen Medium bei pH-Werten von 7 bis 14, bevorzugt pH 7,5 bis 11, und Temperaturen von -10°C bis 140°C, bevorzugt 10 bis 120°C, durchgeführt.
Die Verbindung der allgemeinen Formel (III) kann in an sich bekannter Weise aus Perylentetracarbonsäureanhydrid und 1,4-Phenylendiamin-2-sulfonsäure bzw. 1,3-Phenylendiamin-4-sulfonsäure im Molverhältnis 1 : 2 und anschließende Umsetzung mit 2 Mol Cyanursäurechlorid hergestellt werden.

Als Carbonsäuren der allgemeinen Formel (IV) können nach dem erfindungsgemäßen Verfahren beispielsweise Glycin, N-Methylglycin, 2-Aminopropionsäure, 3-Aminopropionsäure, 2-Aminobuttersäure, 3-Aminobuttersäure, 6-Aminohexancarbonsäure, Valin, Leucin, Isoleucin, Serin, Asparaginsäure, Glutaminsäure, Lysin, 1,3-Diaminobutter-säure, 1,4-Diaminopentancarbonsäure, 2-Aminobenzolcarbonsäure, 3-Aminobenzolcarbonsäure, 4-Aminobenzolcarbonsäure und 5-Aminobenzol-1,3-dicarbonsäure eingesetzt werden.

Als Sulfonsäuren der allgemeinen Formel (V) eignen sich beispielsweise Aminomethansulfonsäure, Taurin, 2-Aminopropansulfon-säure, 3-Aminopropansulfonsäure, 2-Aminobenzolsulfonsäure, 3-Amino-benzolsulfonsäure, 4-Aminobenzolsulfonsäure und 4-Aminobenzol-1,3-disulfonsäure.

Als Hydroxyl-Verbindungen der allgemeinen Formel (VI) können beispielsweise Wasser, Methanol, Ethanol, Isopropanol, n-Butanol, Isobutanol, Glykol, Propylenglykol, Glykol-monomethylether, Glykolmonoethylether und Glykolmonobutylether eingesetzt werden.

Als Amine der allgemeinen Formel (VII) kommen beispielsweise Ammoniak, Methylamin, Ethylamin, Propylamin, Hexylamin, Ethanolamin, Diethanolamin, 2-Aminopropanol, 3-Aminopropanol, Dipropylamin und N-Methylethanol in Betracht.

Die erfindungsgemäßen Perylen-Farbstoffe der allgemeinen Formel I können aus den zunächst erhaltenen, bevorzugt wäßrigen Reaktionsgemischen durch übliche Aufarbeitungsmethoden, beispielsweise durch Aussalzen, Filtrieren oder durch Sprühtrocknung, gegebenenfalls nach Entsalzung mittels Membranfiltration, isoliert werden. Es kann jedoch auch auf eine Isolierung verzichtet werden und die erfindungsgemäße Farbstoffe der allgemeinen Formel I enthaltenden Reaktionsmischungen durch Zusatz von organischen und/oder anorganischen Basen und/oder hydrotropen Mitteln direkt in konzentrierte Farbstoff-Lösungen übergeführt werden.

Als anorganische Basen kommen beispielsweise Lithiumhydroxid, Lithiumcarbonat, Natriumhydroxid, Natriumhydrogencarbonat, Kaliumhydroxid, Kaliumcarbonat und Ammoniak in Betracht. Geeignete organische Basen sind beispielsweise Monoethanolamin, Diethanolamin, Triethanolamin, 2-Amino-propanol, 3-Aminopropanol, Dipropanolamin, Tripropanolamin, **N**-Methylamino-ethanol, **N,N**-Dimethylaminoethanol, **N**-Phenylamino-propanol, Ethylendiamin, Tetramethylethylendiamin, Tetramethylpropylendiamin, Tetramethylhexylen-diamin, Diethylentriamin, Triethylentetramin und Polyethylenimin.
Hydrotrope Verbindungen sind beispielsweise beschrieben in Melliand **43**, 718 (1962), Angew. Chem. **63**, 327 (1951), J. Soc. Dyers. Col. **1973**, 128 und Chemiker-Zeitung **96**, 248 (1972). In Betracht kommen beispielsweise Formamid, Harnstoff, Tetramethylharnstoff, e-Caprolactam, Ethylenglykol, Diethylenglykol, Triethylenglykol, Polyethylenglykol, Butylglykol, Methylcellosolve, Glycerin, N-Methylpyrrolidon, 1,3-Diethyl-2-imidazolidinon, Natrium-Xylolsulfonat, Natrium-Cumolsulfonat und Natrium-Butylmonoglykolsulfat.

Gegenstand der vorliegenden Erfindung ist auch die Verwendung von wasserlöslichen Perylen-Farbstoffen der allgemeinen Formel I zum Färben und Bedrucken von natürlichen und synthetischen Fasermaterialien, insbesondere zur Aufzeichnung von Schrift und Bildern auf verschiedenen Aufzeichnungsmedien, sowie zum Färben von Papier oder Zellstoffen in der Masse.

Beispielsweise sind die erfindungsgemäßen Perylen-Farbstoffe der allgemeinen Formel I geeignet als Farbmittel in elektrophotographischen Tonern und Entwicklern, wie z.B. Einkomponenten- und Zweikomponentenpulvertonern, Magnettonern, Flüssigtonern, Polymerisationstonern sowie weiteren Spezialtonern (siehe z.B. L. B. Schein, Electrophotography and Development Physics, Springer Series in Electrophysics 14, Springer Verlag, 2 nd Edition, 1992).

Die erfindungsgemäßen Farbstoffe der Formel I eignen sich insbesondere zur Herstellung von Aufzeichnungsflüssigkeiten, insbesondere von Tinten für das Tintenstrahl- oder Ink-Jet-Druckverfahren, aber auch für sonstige Druck-, Vervielfältigungs-, Markierungs- Schreib-, Zeichen-, Stempel- oder Registrierverfahren. Dabei werden rote Druckbilder von ausgezeichneter Qualität erhalten, die sich durch eine sehr gute Brillanz und Druckschärfe sowie durch eine sehr gute Lichtechtheit, Abriebfestigkeit und Wasserechtheit, auch auf normalen, nicht beschichteten Papiersorten auszeichnen.

Gegenstand der vorliegenden Erfindung sind auch Aufzeichnungsflüssigkeiten, die dadurch gekennzeichnet sind, daß sie eine oder mehrere wasserlösliche Perylen-Farbstoffe der allgemeinen Formel I enthalten. Die Herstellung von solchen Aufzeichnungsflüssigkeiten erfolgt nach an sich bekannten Verfahren. Angaben über Zusammensetzungen, insbesondere auch solchen von Tinten für das Tintenstrahldruckverfahren, finden sich z.B. in DE-A-21 32 324, DE-A-21 60 475, US-A-4 024 096, US-A-4 024 397 und US-A-4 070 322. Die genaue Zusammensetzung der Aufzeichnungsflüssigkeiten wird selbstverständlich dem beabsichtigten Verwendungszweck angepaßt.

Die fertigen Aufzeichnungsflüssigkeiten enthalten im allgemeinen insgesamt 0,5 bis 15 Gew.-% (trocken gerechnet) eines oder mehrerer löslicher Farbstoffe der allgemeinen Formel I, 0 bis 99 Gew.-% Wasser und 0,5 bis 99,5 Gew.-% Lösungsmittel und/ oder Feuchthaltemittel. In einer bevorzugten Ausführungsform enthalten die fertigen Aufzeichnungsflüssigkeiten 0,5 bis 15 Gew.% Farbstoff, 40 bis 85 Gew.-% Wasser und 10 bis 50 Gew.-% Lösungsmittel und/ oder Feuchthaltemittel, in einer anderen bevorzugten Ausführungsform 0,5 bis 15 Gew.-% Farbstoffe, 0 bis 20 Gew.-% Wasser und 70 bis 99,5 Gew.-% Lösungsmittel und/oder Feuchthaltemittel. Die fertigen Aufzeichnungsflüssigkeiten können noch weitere, nachstehend erwähnte Zusätze enthalten.

Zur Herstellung der Aufzeichnungsflüssigkeiten benutztes Wasser wird vorzugsweise in Form von destilliertem oder entsalztem Wasser eingesetzt. Bei den in den Aufzeichnungsflüssigkeiten enthaltenen Lösungsmitteln und/oder Feuchthaltemitteln kann es sich um ein organisches Lösungsmittel oder um ein Gemisch derartiger Lösungsmittel handeln, wobei mit Wasser mischbare Lösungsmittel bevorzugt sind. Geeignete Lösungsmittel sind beispielsweise ein- oder mehrwertige Alkohole, deren Ether und Ester, z. B. Alkanole, insbesondere mit 1 bis 4 C-Atomen, wie z.B. Methanol, Ethanol, Propanol, Isopropanol, Butanol, Isobutanol; zwei - oder dreiwertige Alkohole, insbesondere mit 2 bis 6 C-Atomen, z.B. Ethylenglykol, Propylenglykol, 1,3-Propandiol, 1,4-Butandiol, 1,5-Pentandiol, 1,6-Hexandiol, 1,2,6-Hexantriol, Glycerin, Diethylenglykol, Dipropylenglykol, Triethlenglykol, Polyethylenglykol, Tripopylenglykol, Polypropylenglykol; niedere Alkylether von mehrwertigen Alkoholen, wie z.B. Ethylenglykol-mono-methyl, -ethyl- oder -butyl-ether, Triethylenglykol-mono-methyl- oder -ethyl-ether; Ketone und Ketonalkohole wie z. B. Aceton, Methylethylketon, Diethylketon, Methylisobutylketon, Methylpentylketon, Cyclopentanon, Cyclohexanon, Diacetonalkohol; Amide, wie z. B. Dimethylformamid, Dimethylacetamid, **N**-Methylpyrrolidon; ferner Harnstoff, Tetramethylharnstoff, Thiodiglykol.

Weiter können die erfindungsgemäßen Aufzeichnungsflüssigkeiten noch übliche Zusatzstoffe enthalten, beispielsweise Konservierungsmittel, kationische, anionische oder nichtionogene oberflächenaktive Substanzen (Tenside und Netzmittel), sowie Mittel zur Regulierung der Viskosität, z.B. Polyvinylalkohol, Cellulosederivate, oder wasserlösliche natürliche oder künstliche Harze als Filmbildner bzw. Bindemittel zur Erhöhung der Haft- und Abriebfestigkeit.

Amine, wie z. B. Ethanolamin, Diethanolamin, Triethanolamin, **N,N**-Dimethylethanolamin, Diisopropylamin dienen hauptsächlich zur Erhöhung des pH-Wertes der Aufzeichnungsflüssigkeit. Sie sind normalerweise zu 0 bis 10 Gew.-%, vorzugsweise 0,5 bis 5 Gew.-% in der Aufzeichnungsflüssigkeit vorhanden.

Bei Aufzeichnungsflüssigkeiten für das Ink-Jet-Druckverfahren können je nach Ausführungsform diese Druckverfahrens, z.B. als Continuous-Jet-, Intermittent-Jet-, Impuls-Jet- oder Compound-Jet-Verfahren, gegebenenfalls noch weitere Additive, z. B. zur Pufferung des pH-Wertes, zur Einstellung der elektrischen Leitfähigkeit, der spezifischen Wärme, des thermischen Expansionskoeffizienten und der Leitfähigkeit zugesetzt werden.

Die Aufzeichnungsflüssigkeiten lassen sich in einfacher Weise durch Vermischen der Komponenten herstellen, was z.B. so erfolgen kann, daß ein oder mehrere Farbstoffe der allgemeinen Formel I in Wasser und/oder Lösungsmittel gelöst werden oder auch so, daß eine bei der Herstellung des Farbstoffs der allgemeinen Formel I anfallende wäßrige Lösung gegebenenfalls nach geeigneter Vorbereitung im gewünschten Maße verdünnt wird, und daß dann weitere Komponenten, wie Wasser, Lösungsmittel, Zusatzstoffe ect., zugemischt werden.

Bei der Lagerung erfindungsgemäßer Aufzeichnungsflüssigkeiten tritt keine Abscheidung von Niederschlägen auf, welche zu unscharfen Druckbildern oder zur Verstopfung von Düsen führt.

Die erfindungsgemäßen Aufzeichnungsflüssigkeiten liegen hinsichtlich Viskosität und Oberflächenspannung in den für das Ink-Jet-Verfahren geeigneten Bereichen. Sie liefern Druckbilder hoher optischer Dichte mit ausgezeichneter Lichtechtheit, Wasserechtheit, Abriebfestigkeit und Auflösung.

Beim Färben von Papier oder Zellstoffen in der Masse werden mit den erfindungsgemäßen Farbstoffen der Formel I brillante rote Färbungen erhalten, die sich durch eine hohe Farbstärke und sehr gute Echtheitseigenschaften wie beispielsweise Wasserechtheit, Zylinderechtheit, Ausblutechtheit, Säureechtheit, Alkaliechtheit und insbesondere Lichtechtheit auszeichnen.
Vorteilhaft ist ferner, daß die erfindungsgemäßen Farbstoffe der allgemeinen Formel I eine hohe Affinität bzw. Substantivität zur Cellulosefaser besitzen, so daß ökologisch günstige Färbereiabwässer anfallen.

Gegenstand der vorliegenden Erfindung sind auch konzentrierte Flüssigeinstellungen für die Papiermassefärbung, die dadurch gekennzeichnet sind, daß sie eine oder mehrere wasserlösliche Perylen-Farbstoffe der Formel I enthalten. Bevorzugt enthalten die erfindungsgemäßen Flüssigeinstellungen für die Papiermassefärbung 0,5 bis 30 Gew.-%, besonders bevorzugt 10 bis 20 Gew.-% einen oder mehrere Farbstoffe der allgemeinen Formel I. Die erfindungsgemäßen Flüssigeinstellungen können an sich bekannte hydrotrope Verbindungen der bereits genannten Art, beispielsweise in einer Menge von 0,5 bis 30 Gew.-% enthalten.

Die folgenden Beispiele dienen zur Erläuterung der Erfindung, ohne sie jedoch einzuschränken. Bei den Gehaltsangaben handelt es sich um Gewichtsprozente.

### Beispiel 1

78,1 g eines aus Perylentetracarbonsäureanhydrid und 1,4-Phenylen-2-sulfonsäure im Molverhältnis 1 : 2 hergestellten Farbstoffs der Formel 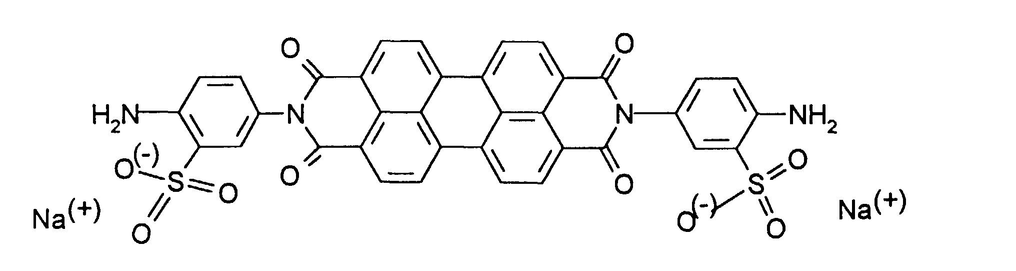 werden in 900 ml Wasser eingetragen und bei 15°C mit 48,6 g Cyanurchlorid versetzt. Durch Zugabe von 64,0 g Natriumhydrogencarbonat wird der pH-Wert des Reaktionsgemischs bei pH 3,5 gehalten. Zur Vervollständigung der Reaktion rührt man 10 Stunden nach und versetzt den erhaltenen Farbstoff der Formel 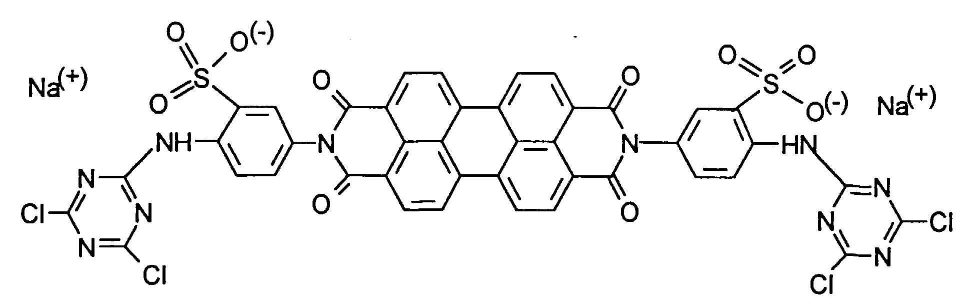 mit einer Lösung von 37,6 g Glycin in 160 ml Wasser und 50 ml 10 N Natronlauge. Das Reaktionsgemisch wird anschließend auf 60°C geheizt und 1 Stunde bei 60°C sowie 2 Stunden bei 80°C nachgerührt, wobei der pH-Wert durch Zugabe von 13,6 g Natriumcarbonat bei pH 8 gehalten wird. Man erhält eine intensiv blaustichig-rote Lösung des Farbstoffs der Formel 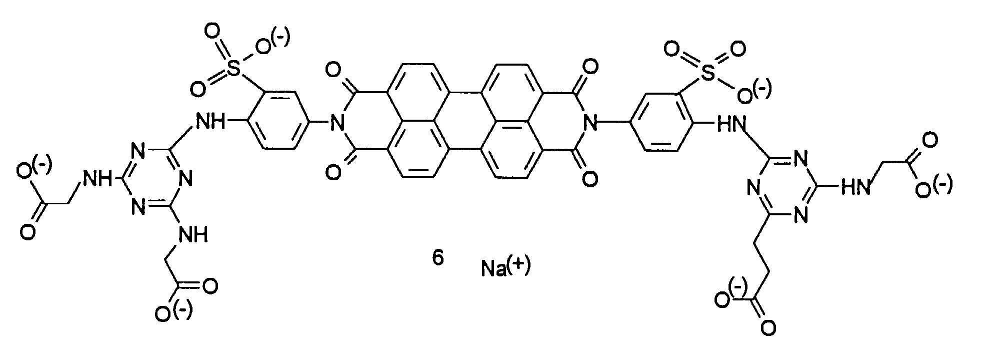 welche anschließend durch Membranfiltration entsalzt und getrocknet wird.
Ausbeute: 130,5 g rotes Pulver
Absorptionsspektrum in Wasser: λₘₐₓ = 501 nm, 537 nm.
Der nach Beispiel 1 erhaltene Perylen-Farbstoff eignet sich hervorragend zur Herstellung von Aufzeichnungsflüssigkeiten für das Ink-Jet-Verfahren, wobei brillante blaustichig-rote Druckbilder mit ausgezeichneter Lichtechtheit und sehr guter Wasserechtheit erhalten werden.

### Beispiel 2

Verfährt man nach den Angaben des Beispiels 1, setzt jedoch statt einer Lösung von 37,1 g Glycin in 160 ml Wasser und 50 ml 10 N Natronlauge eine Lösung von 22,5 g Glycin und 6,5 g 2-Aminoethanol ein, so erhält man nach Entsalzung der zunächst erhaltenen Farbstofflösung und Sprühtrocknung
125,5 g eines roten Farbstoffs der Formel 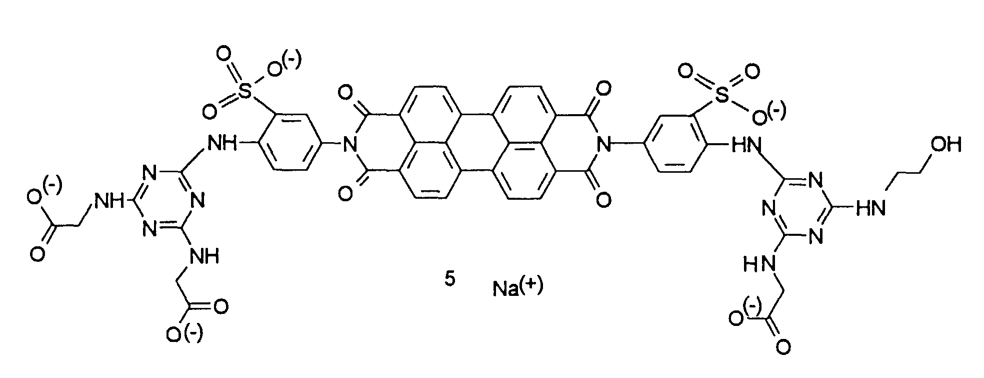 der sich hervorragend zur Herstellung von Aufzeichnungsflüssigkeiten für das Ink-Jet-Verfahren eignet.
Absorptionsmaximum in Wasser: λₘₐₓ: 500 nm, 536 nm.

### Beispiel 3

Setzt man 78,1 g des aus Perylendicarbonsäureanhydrid und 2 Mol 1,3-Phenylendiamin-4-sulfonsäure erhaltenen Farbstoffs der Formel 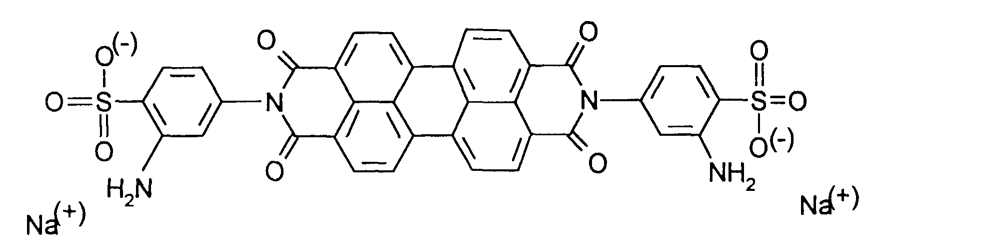 und verfährt nach den Angaben des Beispiels 1, so erhält man 128,8 g des Farbstoffs der Formel 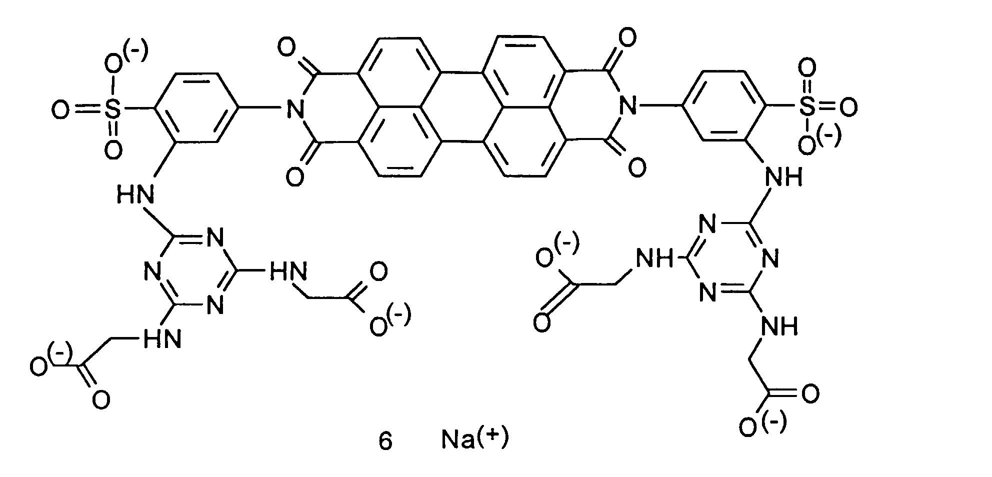 der sich hervorragend zur Herstellung von Tinten für das Ink-Jet-Verfahren eignet.
Absorptionsspektrum in Wasser: λₘₐₓ = 507 nm, 545 nm.

### Beispiel 4

1208,4 g der nach Beispiel 4 erhaltenen Farbstofflösung werden vor der Entsalzung mit 50,0 g Harnstoff und 2,0 g eines handelsüblichen Konservierungsmittels, z.B. Mergal K 10 N, versetzt. Man erhält eine 10,4 % ige, lagerstabile Lösung des Farbstoffs, die sich hervorragend zum Färben von Papier in der Masse eignet.

### Beipiel 5

Herstellung von Tinten von 2,5 % Reinfarbstoffgehalt:
2,5 g Reinfarbstoff gemäß Beispiel 1 werden unter Rühren bei 25°C in ein Gemisch von 20,0 g Diethylenglykol, 2,5 g N-Methylpyrrolidon, 1,0 g Triethanolamin und 76,4 g Wasser eingetragen und gelöst.

In der folgenden Tabelle sind weitere erfindungsgemäße Farbstoffe der Formel 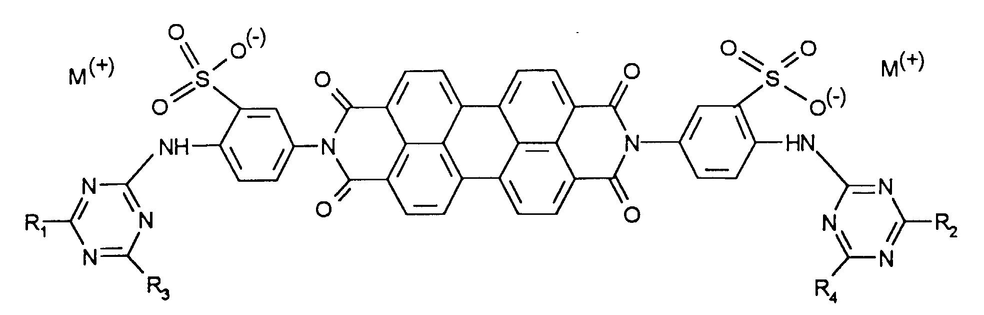 genannt, wobei in der Tabelle die Reste R¹, R², R³ und R⁴, welche sich von den Verbindungen der allgemeinen Formeln (IV) bis (VII) ableiten, das Kation M sowie das Absorptionsspektrum in Wasser aufgeführt sind.

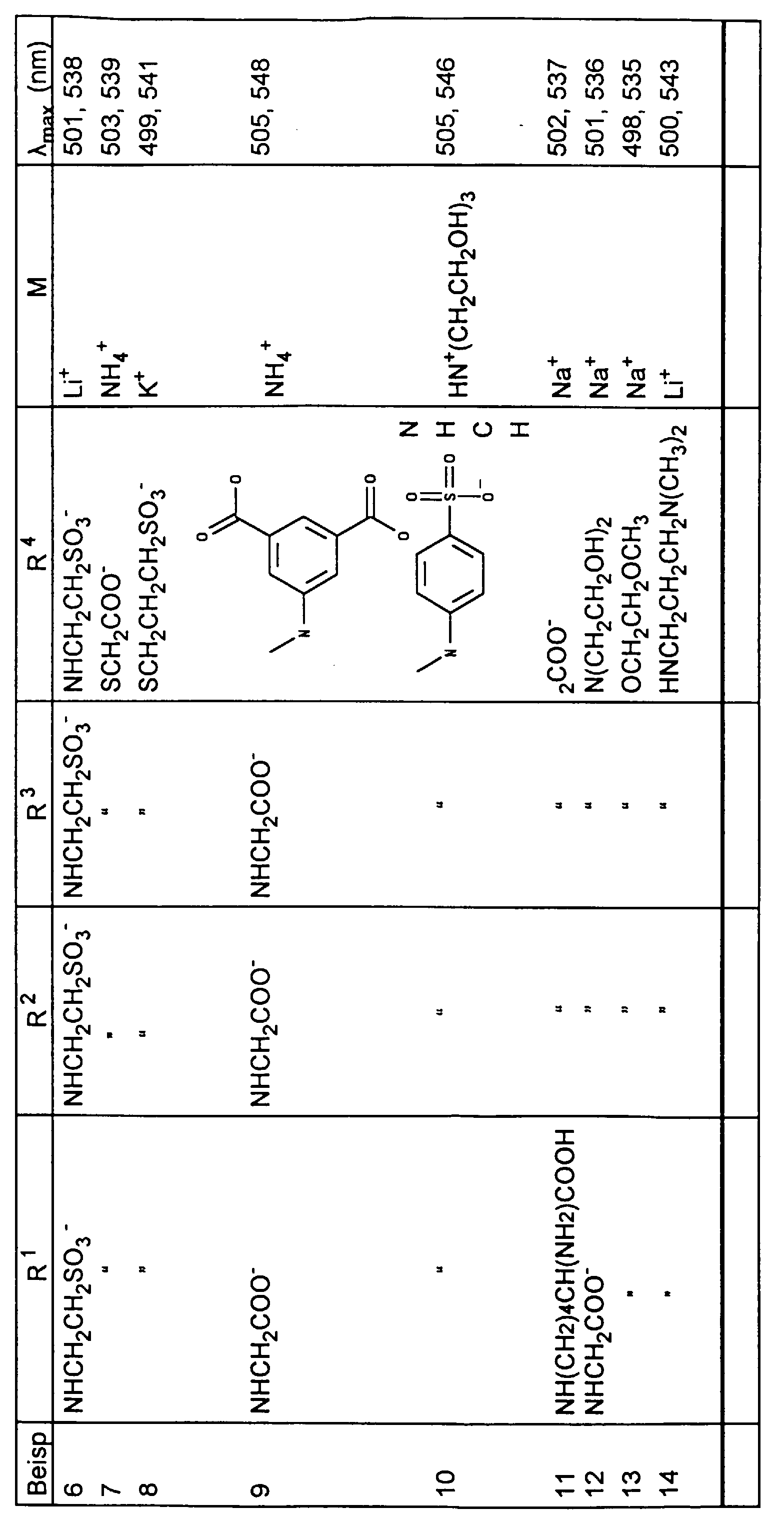

## Patentansprüche

1. Wasserlösliche Perylen-Farbstoffe der allgemeinen Formel I 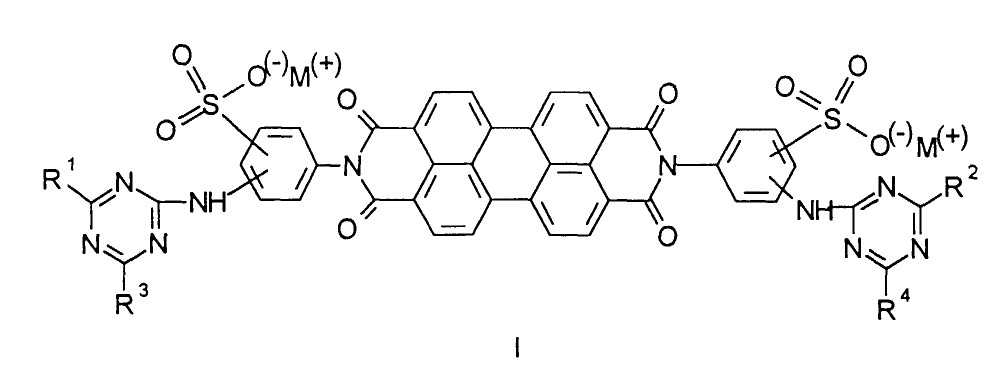 worin
R¹ und R² unabhängig voneinander für die Reste A-X-COOM oder A-X-SO₃M;
R³ und R⁴ unabhängig voneinander für die Reste R¹ oder R² oder für OR⁵ oder NR⁶ R^{7;}
A für NR⁸ oder S;
X für einen geradkettigen oder verzweigten Alkylen-Rest, für einen geradkettigen oder verzweigten, durch Hydroxy, Carboxy oder Amino substituierten Alkylenrest, einen Arylenrest oder einen durch Hydroxy, Carboxy oder Sulfo substituierten Arylen-Rest;
R⁵, R⁶ und R⁷ unabhängig voneinander für Wasserstoff, (C₁-C₄)-Alkyl oder für (C₁-C₄)-Alkyl, das durch einen oder mehrere Hydroxy- oder 2-Hydroxyethoxy-, (C₁-C₄)-Alkoxy- oder Amino-Gruppen substituiert ist;
R⁸ Wasserstoff, Methyl, Ethyl und
M für ein einwertiges Kation oder ein Äquivalent eines mehrwertigen Kations
stehen.

2. Wasserlösliche Perylen-Farbstoffe nach Anspruch 1, dadurch gekennzeichnet, daß X für eine Alkylengruppe mit 1 bis 4 C-Atomen oder Phenylen steht.

3. Wasserlösliche Perylen-Farbstoffe nach Anspruch 1 und/oder 2, dadurch gekennzeichnet, daß R⁵, R⁶ und R⁷ für Wasserstoff , Hydroxyethyl oder Hydroxypropyl stehen.

4. Wasserlösliche Perylen-Farbstoffe nach einem oder mehreren der Ansprüche 1 bis 3, dadurch gekennzeichnet, daß R⁸ Wasserstoff bedeutet.

5. Wasserlösliche Perylen-Farbstoffe nach einem oder mehreren der Ansprüche 1 bis 4, dadurch gekennzeichnet, daß R¹, R², R³ und R⁴ unabhängig voneinander für A-X-COOM oder A-X-SO₃M stehen.

6. Wasserlösliche Perylen-Farbstoffe nach einem oder mehreren der Ansprüche 1 bis 5, dadurch gekennzeichnet, daß M für ein Lithium-, Natrium-, Kalium-, oder ein Ammonium-Ion der allgemeinen Formel II
R⁹R¹⁰R¹¹R¹²N^{⊕} (II)
in der R⁹, R¹⁰, R¹¹ und R¹² unabhängig voneinander Wasserstoff, unsubstituiertes (C₁-C₄)-Alkyl oder durch eine oder mehrere Hydroxy- oder 2-Hydroxyethoxy-Gruppen substituiertes (C₁-C₄)-Alkyl bedeuten, oder für eine Mischung der genannten Kationen steht.

7. Verfahren zur Herstellung von wasserlöslichen Perylen-Farbstoffen der allgemeinen Formel I gemäß Anspruch 1, dadurch gekennzeichnet, daß daß man Perylen-Farbstoffe der allgemeinen Formel III 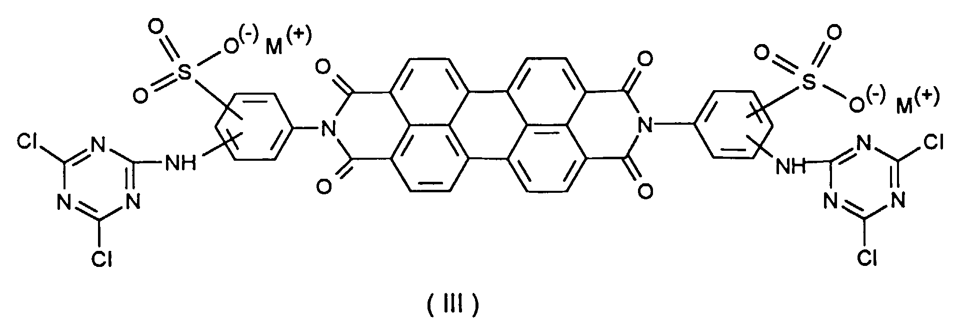 worin M die in Anspruch 1 genannte Bedeutung besitzt, mit Verbindungen der allgemeinen Formeln IV, V, VI und/ oder VII 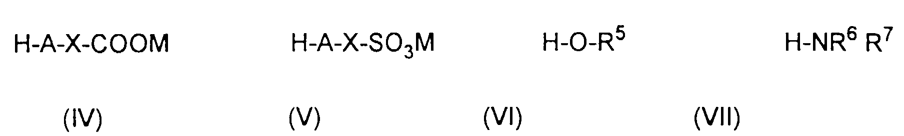 worin A, X, M, R⁵, R⁶ und R⁷ die in Anspruch angegeben definiert sind, umsetzt.

8. Verwendung von wasserlöslichen Perylen-Farbstoffen der allgemeinen Formel I gemäß einem oder mehreren der Ansprüche 1 bis 6 zum Färben und Bedrucken von natürlichen oder synthetischen Fasermaterialien, insbesondere zum Aufzeichnen von Schrift und Bildern auf veschiedenen Aufzeichnungsmaterialien, sowie zum Färben von Papier oder Zellstoffen in der Masse.

9. Aufzeichnungsflüssigkeit, dadurch gekennzeichnet, daß sie einen oder mehrere wasserlöslichen Perylen-Farbstoffe der allgemeinen Formel I gemäß einem oder mehreren der Ansprüche 1 bis 6 enthält.

10. Flüssigeinstellung für die Papiermassefärbung, dadurch gekennzeichnet, daß sie einen oder mehrere wasserlösliche Perylen-Farbsoffe der allgemeinen Formel I gemäß einem oder mehreren der Ansprüche 1 bis 6 enthält.

## Claims

1. A water-soluble perylene dyestuff of the formula I 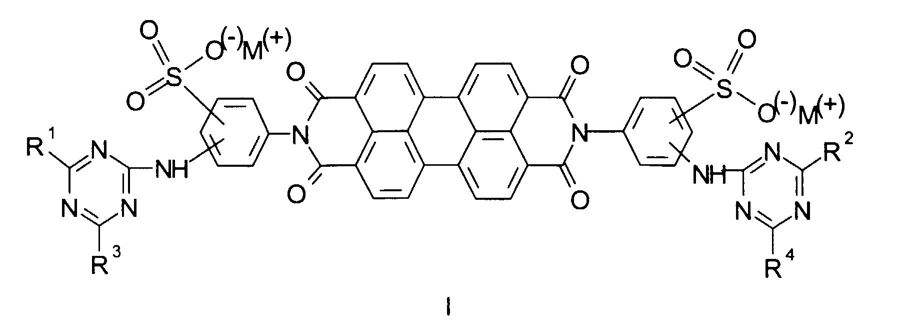 in which
R¹ and R² independently of one another are the radicals A-X-COOM or A-X-SO₃M;
R³ and R⁴ independently of one another are the radicals R¹ or R², or are OR⁵ or NR⁶ R⁷;
A is NR⁸ or S;
X is a straight-chain or branched alkylene radical, a straight-chain or branched alkylene radical which is substituted by hydroxyl, carboxyl or amino, an arylene radical or an arylene radical which is substituted by hydroxyl, carboxyl or sulfo;
R⁵, R⁶ and R⁷ independently of one another are hydrogen, (C₁-C₄)-alkyl or (C₁-C₄)-alkyl which is substituted by one or more hydroxyl, 2-hydroxyethoxy, (C₁-C₄)-alkoxy or amino groups;
R⁸ is hydrogen, methyl or ethyl and
M is a monovalent cation or one equivalent of a polyvalent cation.

2. A water-soluble perylene dyestuff as claimed in claim 1, in which X is an alkylene group having 1 to 4 carbon atoms or phenylene.

3. A water-soluble perylene dyestuff as claimed in claim 1 and/or 2, in which R⁵, R⁶ and R⁷ are hydrogen, hydroxyethyl or hydroxypropyl.

4. A water-soluble perylene dyestuff as claimed in one or more of claims 1 to 3, in which R⁸ is hydrogen.

5. A water-soluble perylene dyestuff as claimed in one or more of claims 1 to 4, in which R¹, R², R³ and R⁴ independently of one another are A-X-COOM or A-X-SO₃M.

6. A water-soluble perylene dyestuff as claimed in one or more of claims 1 to 5, in which M is a lithium, sodium or potassium ion or an ammonium ion of the formula II
R⁹ R¹⁰ R¹¹ R¹² N^{⊕} (II)
in which R⁹, R¹⁰ , R¹¹ and R¹² independently of one another are hydrogen, unsubstituted (C₁-C₄)-alkyl or (C₁-C₄)-alkyl which is substituted by one or more hydroxyl or 2-hydroxyethoxy groups, or is a mixture of the cations mentioned.

7. A process for the preparation of a water-soluble perylene dyestuff of the formula I as claimed in claim 1, which comprises reacting a perylene dyestuff of the formula III 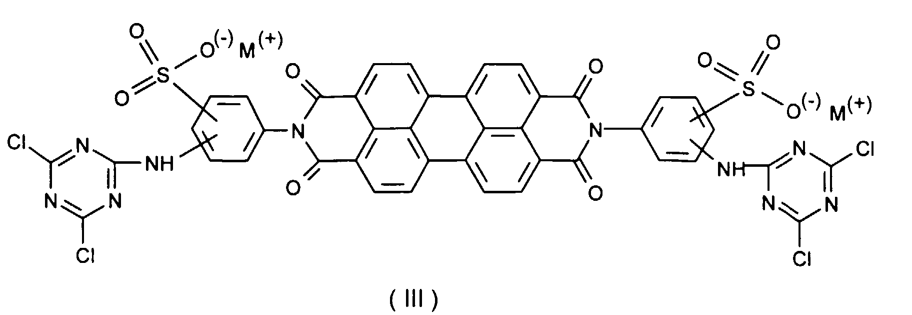 in which M has the meaning given in claim 1, with compounds of the formulae IV, V, VI and/or VII 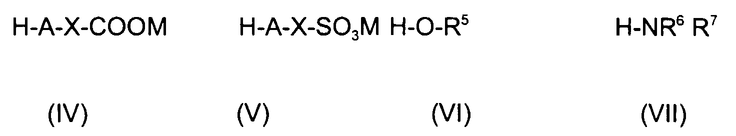 in which A, X, M, R⁵, R⁶ and R⁷ are as defined in claim 1.

8. The use of a water-soluble perylene dyestuff of the formula I as claimed in one or more of claims 1 to 6 for dyeing and printing naturally occurring or synthetic fiber materials, in particular for recording writing and images on various recording materials, and for dyeing paper or celluloses in the pulp.

9. A recording liquid which comprises one or more water-soluble perylene dyestuffs of the formula I as claimed in one or more of claims 1 to 6.

10. A liquid formulation for dyeing paper in the pulp, which comprises one or more water-soluble perylene dyestuffs of the formula I as claimed in one or more of claims 1 to 6.

## Revendications

1. Colorants pérylènes hydrosolubles de formule générale I 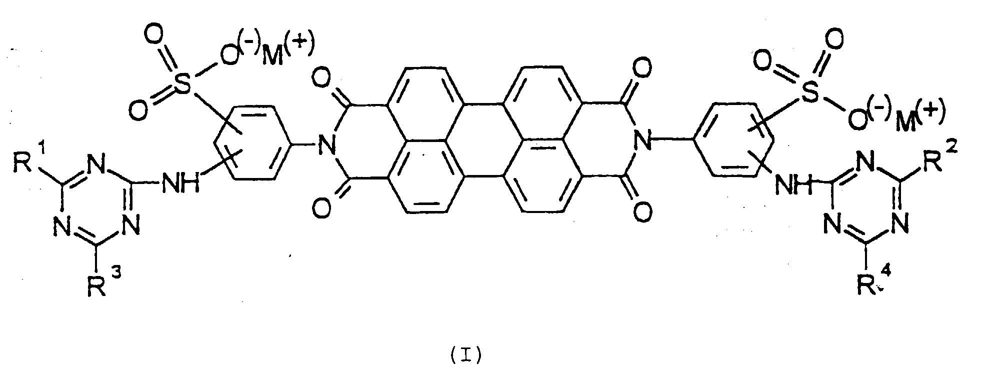 dans laquelle
R¹ et R², indépendamment l'un de l'autre, représentent les radicaux A-X-COOM ou A-X-SO₃M ;
R³ et R⁴, indépendamment l'un de l'autre, représentent les radicaux R¹ ou R² ou représentent OR⁵ ou NR⁶R⁷ ;
A représente NR⁸ ou S ;
X représente un radical alkylène rectiligne ou ramifié, alkylène substitué par hydroxy, carboxy ou amino, un radical arylène ou un radical arylène substitué par hydroxy, carboxy ou sulfo ;
R⁵, R⁶ et R⁷, indépendamment l'un de l'autre, représentent hydrogène, alkyle en C₁ à C₄ ou alkyle en C₁ à C₄ qui est substitué par un ou plusieurs groupes hydroxy ou 2-hydroxyéthoxy, alcoxy en C₁ à C₄ ou amino ;
R⁸ représente hydrogène, méthyle, éthyle et
M représente un cation monovalent ou un équivalent d'un cation plurivalent.

2. Colorants pérylènes hydrosolubles selon la revendication 1, caractérisés en ce que X représente un groupe alkylène avec 1 à 4 atomes de C ou phénylène.

3. Colorants pérylènes hydrosolubles selon la revendication 1 et/ou 2, caractérisés en ce que R⁵, R⁶ et R⁷ représentent hydrogène, hydroxyéthyle ou hydroxypropyle.

4. Colorants pérylènes hydrosolubles selon l'une ou plusieurs des revendications 1 à 3, caractérisés en ce que R⁸ signifie hydrogène.

5. Colorants pérylènes hydrosolubles selon l'une ou plusieurs des revendications 1 à 4, caractérisés en ce que R¹, R², R³ et R⁴ représentent, indépendamment l'un de l'autre, A-X-COOM ou A-X-SO₃M.

6. Colorants pérylènes hydrosolubles selon l'une ou plusieurs des revendications 1 à 5, caractérisés en ce que M représente un ion lithium, sodium, potassium ou un ion ammonium de formule générale II
R⁹ R¹⁰ R¹¹ R¹² N^{⊕} (II)
dans laquelle R⁹, R¹⁰, R¹¹ et R¹² représentent, indépendamment l'un de l'autre, hydrogène, alkyle en C₁ à C₄ non substitué ou alkyle en C₁ à C₄ substitué par un ou plusieurs groupes hydroxy ou 2-hydroxyéthoxy, ou un mélange des cations cités.

7. Procédé pour la préparation de colorants pérylènes hydrosolubles de formule générale I selon la revendication 1, caractérisé en ce que l'on fait réagir des colorants pérylènes de formule générale III 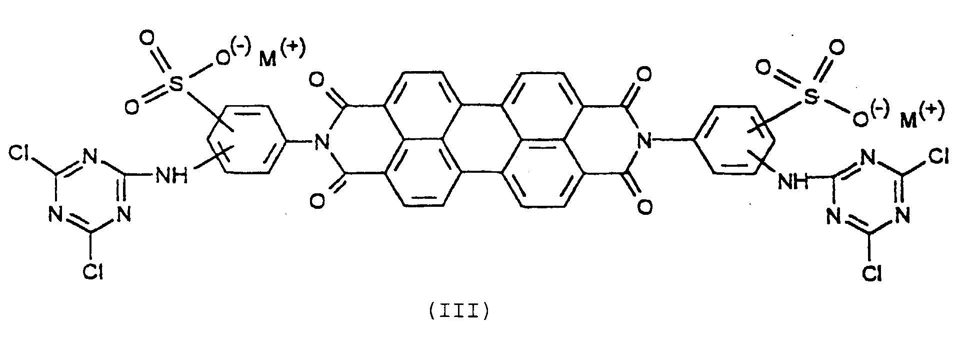 dans laquelle M possède la signification indiquée dans la revendication 1, avec des composés de formules générales IV, V, VI et/ou VII 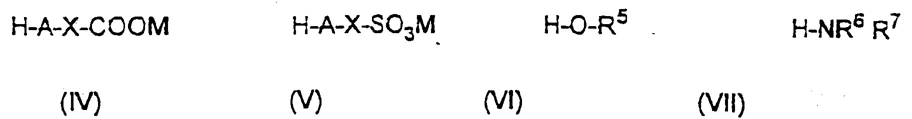 dans lesquelles A, X, M, R⁵, R⁶ et R⁷ sont définis comme indiqué dans la revendication (1).

8. Utilisation de colorants pérylènes hydrosolubles de formule générale I selon l'une ou plusieurs des revendications 1 à 6 pour colorer et imprimer des matières fibreuses naturelles ou synthétiques, en particulier pour représenter des lettres et des images sur différentes matières d'enregistrement, ainsi que pour colorer le papier ou les pâtes de cellulose dans la masse.

9. Liquide d'enregistrement, caractérisé en ce qu'il contient un ou plusieurs colorants pérylènes hydrosolubles de formule générale I selon l'une ou plusieurs des revendications 1 à 6.

10. Composition liquide pour la coloration du papier dans la masse, caractérisée en ce qu'elle contient un ou plusieurs colorants pérylènes hydrosolubles de formule générale I selon l'une ou plusieurs des revendications 1 à 6.
